# EUROPÄISCHE PATENTSCHRIFT

(11) **EP 3 191 429 B1**
(45) Veröffentlichungstag und Bekanntmachung des Hinweises auf die Patenterteilung: **10.11.2021**
(21) Anmeldenummer: 15744494.4
(22) Anmeldetag: 09.07.2015
(51) Int. Cl.: C04B 35/565, C04B 35/63, C04B 35/634, C04B 35/636, C04B 35/66, C04B 35/65, C04B 35/567

(54) **VERWENDUNG EINES VERSATZES FÜR DIE HERSTELLUNG EINES SILIZIUMCARBID BASIERTEN FEUERFESTEN ERZEUGNISSES SOWIE AUS DEM VERSATZ HERGESTELLTES FEUERFESTES ERZEUGNIS**
USE OF A CHARGE FOR MANUFACTURING A SILICON CARBIDE BASED REFRACTORY PRODUCT AND A REFRACTORY PRODUCT OBTAINED FROM SAID CHARGE
UTILISATION D'UNE CHARGE POUR OBTENIR UN OBJET RÉFRACTAIRE A BASE DE CARBURE DE SILICIUM ET OBJET RÉFRACTAIRE OBTENU À PARTIR DE LADITE CHARGE

(30) Priorität: 11.09.2014 DE 102014013388
(43) Veröffentlichungstag der Anmeldung: 19.07.2017
(73) Patentinhaber: Refratechnik Holding GmbH, 80807 München (DE)
(72) Erfinder: SCHINDLER, Volker, 37127 Jühnde (DE); VOIGT, Hartmut, 41352 Korschenbroich (DE)
(74) Vertreter: Dr. Solf & Zapf Patent- und Rechtsanwalts PartG mbB
(86) Internationale Anmeldenummer: PCT/EP2015/065727
(87) Internationale Veröffentlichungsnummer: WO 2016/037730

(56) Entgegenhaltungen:
- EP-A1- 2 634 160
- US-A- 4 578 363
- US-A- 5 521 129
- MORRISON F C R ET AL: "In-situ formation of sialons in refractories containing silicon carbide", BRITISH CERAMIC. TRANSACTIONS AND JOURNAL, MANEY PUBLISHING, GB, Bd. 88, Nr. 5, 1. September 1989 (1989-09-01), Seiten 157-161 157, XP000069594, ISSN: 0266-7606
- None

## Beschreibung

Die Erfindung betrifft die Verwendung eines Versatzes für die Herstellung eines keramisch gebrannten, Siliziumcarbidgranulat basierten, geformten, insbesondere durch Pressen geformten, feuerfesten Erzeugnisses, dessen Siliziumcarbidgranulatkörner über eine mindestens ein Siliziumnitrid und mindestens eine Borverbindung aufweisende mineralische verfestigte Sinterphase miteinander versintert sind, wobei die Sinterphase - auch Bindephase genannt - derart ausgebildet ist, dass sie einer unerwünschten, durch Sauerstoffangriff verursachten Volumenvergrößerung in situ, d. h. in der Ofenatmosphäre eines befeuerten Industrieaggregats weitgehend widersteht, und somit eine gute Oxidationsbeständigkeit gewährleisten kann.

"Basiert" soll bedeuten, dass das Erzeugnis über 60 Gew.-%, insbesondere über 76 Gew.-% Siliziumcarbidgranulat als feuerfesten Werkstoff enthält.

Die Erfindung betrifft auch ein aus dem Versatz hergestelltes feuerfestes Erzeugnis.

Aus der US 5 521 129 A ist ein reaktionsgebundenes feuerfestes SiC enthaltendes Erzeugnis bekannt, das wenigstens 60 Gew.-% SiC-Phase enthält. Die SiC-Phase weist eine Vielzahl von SiC-Pulvern auf und die Bindephase enthält überwiegend ß-Sialon sowie zwischen 5 und 30 Gew.-% Siliziumnitrid. Das Erzeugnis wird durch Sinterung bei 1300-1600 °C in einer Stickstoffatmosphäre aus einem sehr feinteiligen Versatz erzeugt, der SiC-Pulver, Si-Pulver und eine feinteilige Al₂O₃-Komponente enthält. Zur Verbesserung der Oxidationsbeständigkeit wird vorgeschlagen, das Erzeugnis thermisch nachzubehandeln und dafür nochmal zu brennen (refiring).

Das Siliziumcarbidgranulat weist in den erfindungsgemäßen Erzeugnissen übliche Kornbänder z. B. zwischen 0 und 5, insbesondere z. B. zwischen 0 und 3 mm auf. Die Sinterphase enthält als Nitridphasen im Wesentlichen Siliziumnitrid (Si₃N₄) und Siliziumoxynitrid (Si₂ON₂) sowie Si₆₋ₓAlₓOₓN₈₋ₓ (SiAlON) und ggf. auch Bornitrid. Zudem kann die Sinterphase anstelle von Bornitrid oder in Kombination mit Bornitrid eine andere Borverbindung enthalten.

Derartige auf Siliziumcarbid (SiC) basierte feuerfeste Erzeugnisse sind aus der EP 2 634 160 A1 bekannt. Die Sinterphase weist in den bekannten Erzeugnissen neben einer Borverbindung Si₃N₄ und Si₂ON₂ auf, wobei Si₂ON₂ mengenmäßig überwiegt.

Erreicht wird dies auf zwei Wegen. Zum einen werden Formkörper aus einem Versatz im Wesentlichen aus SiC-Granulat, Siliziumpulver (Si-Pulver) und mindestens einer Borverbindung in einer Sauerstoff/Stickstoff-haltigen Atmosphäre keramisch gebrannt, wobei der Sauerstoff als Quelle für die Bildung von Si₂ON₂ aus dem Siliziumpulver dient. Zum anderen werden Formkörper aus einem Versatz aus im Wesentlichen SiC-Granulat, Siliziumpulver (Si-Pulver), Siliziumdioxid (SiO₂) und mindestens einer Borverbindung in einer Stickstoffatmosphäre keramisch gebrannt, wobei das SiO₂ als Sauerstoffquelle für die Bildung von Si₂ON₂ aus Siliziumpulver dient.

Beide Verfahrenswege sind nicht einfach kontrolliert steuerbar ausführbar, denn zum einen ist die Sauerstoff/Stickstoffatmosphäre nicht einfach steuerbar und zum anderen muss ein feinteiliges SiO₂ (Kieselrauch) zugesetzt werden, um die überwiegende Si₂ON₂-Bildung zu erreichen.

Aufgabe der Erfindung ist, einen einfachen kostengünstigeren Weg aufzuzeigen, gesinterte, bei Sauerstoffangriff in situ gute Volumenbeständigkeit aufweisende SiC-basierte feuerfeste geformte Erzeugnisse zu schaffen, deren Sinterphase eine Matrix mit zumindest einem Siliciumnitrid und einer Borverbindung aufweist.

Diese Aufgabe wird durch eine Verwendung mit den Merkmalen von Anspruch 1 und Erzeugnisse mit den Merkmalen der Ansprüche 9, 10, 11 oder 12 gelöst. Vorteilhafte Ausführungsformen der Erfindung werden in den von diesen Ansprüchen abhängigen Unteransprüchen angegeben.

Im Rahmen der Erfindung wird SiC-Granulat mit üblichem, oben angegebenen Kornaufbau verwendet. Die Körner der jeweils verwendeten Körnung sind über eine aufgrund eines keramischen Brandes in Stickstoffatmosphäre zwischen 1300 °C und 1500 °C, insbesondere z. B. zwischen 1400 °C und 1450 °C, erzeugten Sinterphase fest miteinander versintert und bilden somit einen geformten Festkörper.

Im Rahmen der Erfindung wird eine Sinterphase erzeugt, die neben mindestens einem Siliziumnitrid wie Si₃N₄ und/oder Si₂ON₂ und mindestens einer Borverbindung, die z. B. auch Bornitrid sein kann, Silizium-Aluminiumoxid-Nitrid (SiAlON Si₆₋ₓAlₓOₓN₈₋ₓ) enthält, wobei erfindungsgemäß - unabhängig von der Borverbindung oder den Borverbindungen - bezüglich der Siliziumnitride SiAlON und/oder Si₃N₄ oder Si₃N₄ + SiAlON mengenmäßig überwiegt und Si₂ON₂ im Vergleich jeweils in geringeren Mengen vorliegt. Daraus resultieren mengenmäßig folgende Zusammensetzungen der Sinterphase außer der Borverbindung bzw. den Borverbindungen:

SiAlON ≥ Si₃N₄ ≥ Si₂ON₂

Si₃N₄ ≥ SiAlON ≥ Si₂ON₂

Si₃N₄ ≥ Si₂ON₂ ≥ SiAlON

Si₃N₄ + SiAlON ≥ Si₂ON₂

SiAlON ist als technischer keramischer Werkstoff bekannt. Er existiert in einer α- und β-Phase und weist eine hohe Härte und gute Risszähigkeit auf und wird meist für Schneidwerkstoffe verwendet.

Im Rahmen der Erfindung trägt SiAlON in der Sinterphase zu einer verbesserten Oxidationsbeständigkeit und damit zu einer verbesserten Volumenbeständigkeit des SiC-basierten feuerfesten Erzeugnisses bei im Vergleich zu einer nur Si₃N₄ und/oder Si₂ON₂ enthaltenden Sinterphase, wobei unerheblich ist, ob SiAlON als α- und/oder β-Phase vorliegt. Die Wirkung des SiAlON ist unabhängig von der Wirkung der Borverbindung bzw. den Borverbindungen.

Eine erfindungsgemäß erzeugte Sinterphase enthält z. B.:
5 bis 95 Gew.-%, insbesondere 34 bis 59 Gew.-% Si₃N₄
4 bis 47 Gew.-%, insbesondere 21 bis 31 Gew.-% SiAlON
0,9 bis 46 Gew.-%, insbesondere 19,7 bis 34,6 Gew.-% Si₂ON₂,
0,1 bis 2 Gew.-%, insbesondere 0,3 bis 0,4 Gew.-% Bor, berechnet aus der mindestens einen enthaltenen Borverbindung oder den Borverbindungen
wobei das Si₂ON₂ anteilmäßig immer in geringerer Menge als oder in gleicher Menge wie Si₃N₄ vorliegt, vorzugsweise aber auch in geringerer Menge als oder in gleicher Menge wie SiAlON oder aber in geringerer oder gleicher Menge als Si₃N₄ + SiAlON. Die Sinterphasenbestandteile wie Si₃N₄, Si₂ON₂ und SiAlON sowie die Borverbindung bzw. die Borverbindungen und/oder die Anteile der festen, mit den SiC-Körnern den geformten Festkörper des erfindungsgemäßen, feuerfesten Erzeugnisses bildenden Sinterphase im gesamten geformten erfindungsgemäßen Erzeugnis werden mit Hilfe der Röntgenphasenanalyse gegen Standards oder mit der Rietveld-Auswertemethode und einer zusätzlichen chemischen Analyse über XRD wie folgt ermittelt.

Es wird die gesamte Menge an Si₃N₄ und SiAlON sowie Korund mit der Röntgenphasenanalyse bestimmt. Die gesamte Menge an Aluminium im Werkstoff wird durch XRD Messung als Al₂O₃ bestimmt. Die Menge an Aluminium, welches nicht im Korund gebunden ist, wird durch die Subtraktion des Korund, ermittelt mit der Röntgenphasenanalyse, vom gesamt Al₂O₃-Gehalt ermittelt. Diese Menge an Aluminium trägt zur Bildung von SiAlON bei. Durch den Austausch von Silizium durch Aluminium und Stickstoff durch Sauerstoff wird die chemische Formel von Si₆₋ₓAlₓOₓN₈₋ₓ wiedergegeben. Der Koeffizient x kann hierbei Werte zwischen 0 und 4,2 annehmen (GAUCKLER L.J., LUKAS H.L., PETZOW G.: Contribution to the Phase Diagram Si3N4-AlN-Al2O2SiO2. J. Am. Ceram. Soc., 58 (7-8): 346-347, 1975). Da die Menge an Aluminium im Gegensatz zu Silizium einen geringen Anteil darstellt, wird davon ausgegangen, dass jeweils nur ein Silizium durch ein Aluminium ersetzt wird.

Die Menge an SiAlON wird somit durch die Menge an Al₂O₃, die nicht als Korund ermittelt wurde, mit 26,47 % (entspricht der Menge eines Al im Al₂O₃) multipliziert und anschließend mit dem Faktor, um den das Si₅AlON₇ schwerer ist als ein Al, multipliziert (Faktor = 10,47).

Die Menge an Si₃N₄ wird durch die Reduktion der Gesamtmenge an Si₃N₄ und SiAlON aus der Röntgenbeugungsanalyse durch den errechneten SiAlON-Gehalt ermittelt.

Die Menge an Si₂ON₂ wird direkt mit der Röntgenphasenanalyse ermittelt.

Aufgrund der geringen Menge an Bor im Erzeugnis wird für eine Charakterisierung nur die Menge an Bor bestimmt.

Die erfindungsgemäßen SiC-basierten geformten feuerfesten Erzeugnisse weisen Anteile an Sinterphase, z. B. zwischen 10 und 30, insbesondere z. B. zwischen 18 und 20 Gew.-% auf.

Die erfindungsgemäßen SiC-basierten geformten feuerfesten Erzeugnisse haben eine Oxidationsbeständigkeit gemessen nach ASTM C-863 (steam oxidation test ASTM C-863) z. B. zwischen 0 und 1,3, insbesondere z. B. zwischen 0,2 und 0,4 Vol.-%, gemessen bei 1000 °C im Beaufschlagungszeitraum bis 500 Stunden auf.

Die erfindungsgemäßen geformten, gesinterten, SiC-basierten feuerfesten Erzeugnisse werden gemäß der Erfindung aus einem zumindest folgende Bestandteile aufweisenden trockenen Versatz hergestellt:
SiC-Granulat: 60 bis 89,4, insbesondere 78 bis 81 Gew.-%
Si-Pulver: 10 bis 25, insbesondere 14 bis 16 Gew.-%
Borkomponente (vorzugsweise pulverförmig und errechnet als Bor,
z. B. aus der Borverbindung oder den Borverbindungen):
0,1 bis 2, insbesondere 0,3 bis 0,4 Gew.-%
SiAlON bildende Al-Komponente (vorzugsweise pulverförmig und errechnet als Al₂O₃ aus einem Al- und/oder Al₂O₃- und/oder Al₂O₃/SiO₂-Produkt): 0,5 bis 13, insbesondere 4,7 bis 5,6 Gew.-%

Zusätzlich kann der erfindungsgemäß verwendete Versatz bis 3 Gew.-% einer feinteiligen SiO₂-Komponente, wie Quarzsand und/oder Kieselgur und/oder Quarzglas, und/oder bis 0,5 Gew.-% einer feinteiligen Calciumkomponente, wie insbesondere Kalksteinmehl und/oder Ca-Stearat und/oder Kalkspat und/oder Kalziumsilikat enthalten.

Pulverförmig oder mehlförmig bedeutet im Rahmen der Erfindung Körnungen unter 0,1 mm. Feinteilig bedeutet im Rahmen der Erfindung unter 20 µm.

Aus den Versätzen werden Formkörper hergestellt, die in einer Stickstoffatmosphäre keramisch gebrannt werden. Dabei sind die Versätze so zusammengestellt, dass sich eine Sinterphase, Siliziumnitrid und ggf. Siliziumoxinitrid aus dem Si-Pulver und SiAlON aus dem Si-Pulver und der Al-Komponente enthaltend, bildet.

Als Borverbindung wird z. B. mindestens ein Produkt aus der folgenden Gruppe verwendet:
Nitride, Carbide, Oxide, Fluoride, Metallverbindungen mit Borkomponente, Borate.

Insbesondere wird Borcarbid und/oder Boroxid und/oder Bornitrid verwendet.

Als Al-Komponente wird z. B. mindestens ein ≥ 80 Gew.-%, vorzugsweise ≥ 98 Gew.-%, Al₂O₃ enthaltendes Produkt oder ein Aluminiumpulver verwendet. Dies ist z. B. mindestens ein Produkt ausgewählt aus der folgenden Gruppe: Aluminiumoxid, Aluminiumhydroxid, Al-Pulver.

Insbesondere wird Aluminiumoxid und/oder Al-Pulver verwendet.

Als Al₂O₃/SiO₂-Produkt wird z. B. mindestens ein Produkt verwendet, das Al₂O₃ und SiO₂ enthält.

Dies ist z. B. mindestens ein Produkt ausgewählt aus der folgenden Gruppe:
Kaolin, Mullit

Nach einer besonderen Ausführungsform der Erfindung wird mindestens ein keramischer Ton als Al₂O₃/SiO₂-Produkt verwendet, z. B. ausgewählt aus der folgenden Gruppe:
Montmorillonit, Illit, Halloysit, Bentonit, Vermiculit Insbesondere wird Bentonit und/oder Montmorillonit und/oder Illit verwendet.

Der mindestens eine keramische Ton dient dabei nicht nur als SiAlON-Bildner im keramischen Brand, sondern auch als Plastifizierungs- und Bindemittel bei der Formgebung der Formkörper, z. B. nach dem Anmachen eines Versatzes mit einer Flüssigkeit, z. B. mit Wasser.

Ein erfindungsgemäß verwendeter Versatz kann zusätzlich noch bis z. B. 10, insbesondere bis 4 Gew.-%, folgende übliche Bestandteile, berechnet auf den Gesamtversatz aufweisen:
- organische temporäre Bindemittel wie Methylcellulose, modifizierte Stärkederivate, wässrige Dextrinlösungen, Ligninderivate, Polyvinylalkohole, Phenolharze und Epoxidharze, Furfurylalkohol und ggf. Mischungen daraus
- organische Verflüssiger, z. B. auf Basis von Polyethylenaddukt nichtionisch, Polyoxyethylenzubereitung, wässriger Lösung von Natriumpolymethacrylat
- Öl, z. B. für die Erhöhung der Fließfähigkeit und somit der Formbarkeit der Masse, zur Reduktion der Abtrocknungsneigung der Masse

Die Erfindung betrifft auch ein SiC-Granulat basiertes, in Stickstoffatmosphäre aus einem erfindungsgemäß verwendeten Versatz hergestelltes, keramisch gebranntes, feuerfestes Erzeugnis, dessen Granulatkörner über eine mindestens eine Siliziumnitrid und mindestens eine Borverbindung enthaltende feste Sinterphase miteinander versintert sind, wobei die Sinterphase neben der mindestens einen Borverbindung Si₃N₄ und SiAlON oder Si₃N₄, Si₂ON₂ und SiAlON enthält, wobei nach der Erfindung zudem ein Merkmal der folgenden Merkmale vorhanden ist:
- die Sinterphase enthält neben der mindestens einen Borverbindung mengenmäßig SiAlON ≥ Si₃N₄ ≥ Si₂ON₂
- die Sinterphase enthält neben der mindestens einen Borverbindung mengenmäßig Si₃N₄ ≥ SiAlON ≥ Si₂ON₂
- die Sinterphase enthält neben der mindestens einen Borverbindung mengenmäßig Si₃N₄ ≥ Si₂ON₂ ≥ SiAlON
- die Sinterphase enthält neben der mindestens einen Borverbindung mengenmäßig Si₃N₄ + SiAlON ≥ Si₂ON₂

Bei dem erfindungsgemäßen Erzeugnis ist vorzugsweise zudem mindestens ein Merkmal der folgenden Merkmale vorhanden:
- die Sinterphase weist folgende Bestandteile auf:
   5 bis 95 Gew.-%, insbesondere 34 bis 59 Gew.-% Si₃N₄
   4 bis 47 Gew.-%, insbesondere 21 bis 31 Gew.-% SiAlON
   0,9 bis 46 Gew.-%, insbesondere 19,7 bis 34,6 Gew.-% Si₂ON₂,
   0,1 bis 2 Gew.-%, insbesondere 0,3 bis 0,4 Gew.-% Bor, berechnet aus der mindestens einen enthaltenen Borverbindung oder den Borverbindungen
   wobei das Si₂ON₂ anteilmäßig immer in geringerer Menge als oder in gleicher Menge wie Si₃N₄ vorliegt, vorzugsweise aber auch in geringerer Menge als oder in gleicher Menge wie SiAlON oder in geringerer Menge als Si₃N₄ + SiAlON
- die Sinterphase ist zwischen 10 und 37, insbesondere zwischen 18 und 20 Gew.-% im feuerfesten Erzeugnis vorhanden
- das feuerfeste Erzeugnis weist eine Oxidationsbeständigkeit gemessen nach ASTM C-863 zwischen 0 und 1,3, insbesondere zwischen 0,2 und 0,4 Vol.-% gemessen bei 1000 °C im Beaufschlagungszeitraum bis 500 Stunden auf.

Die Erfindung betrifft die Verwendung eines Versatzes zur Herstellung eines erfindungsgemäßen, feuerfesten Erzeugnisses, wobei der Versatz die folgenden Bestandteile aufweist:
- 60 bis 89,4, insbesondere 78 bis 81 Gew.-%, SiC-Granulat mit einem üblichen Kornband zwischen 0 und 5 mm, insbesondere zwischen 0 und 3 mm,
- 10 bis 25, insbesondere 14 bis 16 Gew.-%, Si-Pulver,
- 0,1 bis 2, insbesondere 0,3 bis 0,4 Gew.-%, Borkomponente (errechnet als Bor aus der mindestens einen Borverbindung oder den Borverbindungen),
- 0,5 bis 13, insbesondere 4,7 bis 5,6 Gew.-%, SiAlON bildende Al-Komponente (errechnet als Al₂O₃ aus einem Al₂O₃- und/oder Al₂O₃/SiO₂- und/oder Al-Produkt, bevorzugt Al-Pulver

Aus dem Versatz wird erfindungsgemäß ein Formkörper geformt und der Formkörper bei Temperaturen zwischen 1300 °C und 1500 °C, insbesondere zwischen 1400 °C und 1450 °C, in einer Stickstoff haltigen Atmosphäre keramisch gebrannt, derart, dass eine die SiC-Granulatkörner miteinander versinternde Sinterphase gebildet wird, enthaltend neben mindestens einer Borverbindung Siliziumnitrid oder Siliziumnitrid und Siliziumoxinitrid, gebildet aus dem Si-Pulver, und SiAlON, gebildet aus dem Si-Pulver und der Al-Komponente, und in der Sinterphase unabhängig von der Borverbindung SiAlON und/oder Si₃N₄ oder Si₃N₄ plus SiAlON mengenmäßig überwiegt bezüglich Si₂ON₂.

Der erfindungsgemäß verwendete Versatz weist zudem vorzugsweise mindestens einen der folgenden Bestandteile auf:
- bis 3 Gew.-% einer feinteiligen SiO₂-Komponente wie Quarzsand und/oder Kieselgur und/oder Quarzglas, und/oder bis 0,5 Gew.-% einer feinteiligen Calciumkomponente wie Kalksteinmehl und/oder Ca-Stearat und/oder Kalkspat und/oder Kalziumsilikat
- als Borkomponente mindestens eine Verbindung aus der folgenden Gruppe:
   Nitride, Carbide, Oxide, Fluoride, Metallverbindungen mit Borkomponente, Borate,
   insbesondere Borcarbid und/oder Boroxid und/oder Bornitrid
- als SiAlON bildende Al-Komponente ein Al₂O₃-Produkt, das ≥ 80 Gew.-%, vorzugsweise ≥ 98 Gew.-% Al₂O₃, enthält oder ein Al-Pulver
- als SiAlON bildende Al-Komponente ein Al₂O₃/SiO₂-Produkt, das Al₂O₃ und SiO₂ enthält, wie z. B. Ton und/oder Kaolin und/oder Mullit
- als Al₂O₃/SiO₂-Produkt mindestens einen keramischen Ton, insbesondere ausgewählt aus der folgenden Gruppe:
   Montmorillonit, Illit, Halloysit, Bentonit, Vermiculit, insbesondere Bentonit und/oder Montmorillonit und/oder Illit
- bis 10 Gew.-%, insbesondere bis 4 Gew.-%, folgende übliche Bestandteile, berechnet auf den Gesamtversatz:
- organische temporäre Bindemittel wie Methylcellulose, modifizierte Stärkederivate, wässrige Dextrinlösungen, Ligninderivate, Polyvinylalkohole, Phenolharze und Epoxidharze, Furfurylalkohol und ggf. Mischungen daraus
- organischer Verflüssiger z. B. auf Basis von Polyethylenaddukt nichtionisch, Polyoxyethylenzubereitung, wässriger Lösung von Natriumpolymethacrylat
- Öl z. B. für die Erhöhung der Fließfähigkeit und somit der Formbarkeit der Masse, zur Reduktion der Abtrocknungsneigung der Masse.

## Patentansprüche

1. Verwendung eines Versatzes für die Herstellung eines SiC-Granulat basierten, in Stickstoffatmosphäre keramisch gebrannten, feuerfesten Erzeugnisses, dessen Granulatkörner über eine mindestens ein Siliziumnitrid und mindestens eine Borverbindung und zudem SiAlON enthaltende Sinterphase miteinander versintert sind,
**dadurch gekennzeichnet, dass**
der Versatz zumindest die folgenden Bestandteile aufweist:
- 60 bis 89,4, insbesondere 78 bis 81 Gew.-%, SiC-Granulat mit einem üblichen Kornband zwischen 0 und 5 mm, insbesondere zwischen 0 und 3 mm,
- 10 bis 25, insbesondere 14 bis 16 Gew.-%, Si-Pulver,
- 0,1 bis 2, insbesondere 0,3 bis 0,4 Gew.-%, Borkomponente, errechnet als Bor aus der mindestens einen Borverbindung oder den Borverbindungen,
- 0,5 bis 13, insbesondere 4,7 bis 5,6 Gew.-%, SiAlON bildende Al-Komponente, errechnet als Al₂O₃ aus einem Al- und/oder Al₂O₃-und/oder Al₂O₃/SiO₂-Produkt,
wobei aus dem Versatz ein Formkörper geformt und der Formkörper bei Temperaturen zwischen 1300 °C und 1500 °C, insbesondere zwischen 1400 °C und 1450 °C, in einer Stickstoff haltigen Atmosphäre keramisch gebrannt wird, derart, dass eine die SiC-Granulatkörner miteinander versinternde Sinterphase gebildet wird, enthaltend neben mindestens einer Borverbindung Siliziumnitrid oder Siliziumnitrid und Siliziumoxinitrid, gebildet aus dem Si-Pulver, und SiAlON, gebildet aus dem Si-Pulver und der Al-Komponente,
und in der Sinterphase unabhängig von der Borverbindung SiAlON und/oder Si₃N₄ oder Si₃N₄ plus SiAlON mengenmäßig überwiegt bezüglich Si₂ON₂.

2. Verwendung nach Anspruch 1,
**dadurch gekennzeichnet, dass**
der Versatz bis 3 Gew.-% einer feinteiligen SiO₂-Komponente wie Quarzsand und/oder Kieselgur und/oder Quarzglas und/oder bis 0,5 Gew.-% einer feinteiligen Calciumkomponente wie Kalksteinmehl und/oder Ca-Stearat und/oder Kalkspat und/oder Kalziumsilikat enthält.

3. Verwendung nach Anspruch 1 oder 2,
**dadurch gekennzeichnet, dass**
der Versatz als Borkomponente mindestens eine Bor-Verbindung aus der folgenden Gruppe enthält:
Nitride, Carbide, Oxide, Fluoride, Metallverbindungen mit Borkomponente, Borate,
insbesondere Borcarbid und/oder Boroxid und/oder Bornitrid.

4. Verwendung nach einem der vorhergehenden Ansprüche,
**dadurch gekennzeichnet, dass**
der Versatz als SiAlON bildende Al-Komponente ein Al- und/oder Al₂O₃-Produkt enthält, das ≥ 40 Gew.-%, vorzugsweise ≥ 53 Gew.-% AI enthält.

5. Verwendung nach einem der vorhergehenden Ansprüche,
**dadurch gekennzeichnet, dass**
der Versatz als SiAlON bildende Al₂O₃-Komponente ein Al₂O₃/SiO₂-Produkt enthält, insbesondere Ton und/oder Kaolin und/oder Mullit.

6. Verwendung nach Anspruch 5,
**dadurch gekennzeichnet, dass**
der Versatz als Al₂O₃/SiO₂-Produkt mindestens einen keramischen Ton, insbesondere ausgewählt aus der folgenden Gruppe:
Montmorillonit, Illit, Halloysit, Bentonit, Vermiculit,
insbesondere Montmorrilonit und/oder Bentonit und/oder Illit, enthält.

7. Verwendung nach einem der vorhergehenden Ansprüche,
**dadurch gekennzeichnet, dass**
der Versatz bis 10 Gew.-%, insbesondere bis 4 Gew.-%, folgende übliche Bestandteile, berechnet auf den Gesamtversatz enthält:
- organische temporäre Bindemittel, insbesondere Methylcellulose, modifizierte Stärkederivate, wässrige Dextrinlösungen, Ligninderivate, Polyvinylalkohole, Phenolharze und Epoxidharze, Furfurylalkohol oder Mischungen daraus
- organische Verflüssiger, insbesondere auf Basis von Polyethylenaddukt nichtionisch, Polyoxyethylenzubereitung, wässriger Lösung von Natriumpolymethacrylat
- Öl, insbesondere für die Erhöhung der Fließfähigkeit und somit der Formbarkeit der Masse, zur Reduktion der Abtrocknungsneigung der Masse.

8. Verwendung nach einem der vorhergehenden Ansprüche,
**dadurch gekennzeichnet, dass**
der Versatz mit einer Flüssigkeit, insbesondere mit Wasser versetzt und anschließend geformt wird.

9. SiC-Granulat basiertes, in Stickstoffatmosphäre keramisch gebranntes, feuerfestes Erzeugnis, dessen Granulatkörner über eine mindestens eine Siliziumnitrid und mindestens eine Borverbindung und zudem SiAlON enthaltende Sinterphase miteinander versintert sind, hergestellt nach einem der vorhergehenden Ansprüche,
**dadurch gekennzeichnet, dass**
die Sinterphase neben der mindestens einen Borverbindung gewichtsmengenmäßig SiAlON ≥ Si₃N₄ ≥ Si₂ON₂ enthält.

10. SiC-Granulat basiertes, in Stickstoffatmosphäre keramisch gebranntes, feuerfestes Erzeugnis, dessen Granulatkörner über eine mindestens eine Siliziumnitrid und mindestens eine Borverbindung und zudem SiAlON enthaltende Sinterphase miteinander versintert sind, hergestellt nach einem der Ansprüche 1 bis 8,
**dadurch gekennzeichnet, dass**
die Sinterphase neben der mindestens einen Borverbindung gewichtsmengenmäßig Si₃N₄ ≥ SiAlON ≥ Si₂ON₂ enthält.

11. SiC-Granulat basiertes, in Stickstoffatmosphäre keramisch gebranntes, feuerfestes Erzeugnis, dessen Granulatkörner über eine mindestens eine Siliziumnitrid und mindestens eine Borverbindung und zudem SiAlON enthaltende Sinterphase miteinander versintert sind, hergestellt nach einem der Ansprüche 1 bis 8,
**dadurch gekennzeichnet, dass**
die Sinterphase neben der mindestens einen Borverbindung gewichtsmengenmäßig Si₃N₄ ≥ Si₂ON₂ ≥ SiAlON enthält.

12. SiC-Granulat basiertes, in Stickstoffatmosphäre keramisch gebranntes, feuerfestes Erzeugnis, dessen Granulatkörner über eine mindestens eine Siliziumnitrid und mindestens eine Borverbindung und zudem SiAlON enthaltende Sinterphase miteinander versintert sind, hergestellt nach einem der Ansprüche 1 bis 8,
**dadurch gekennzeichnet, dass**
die Sinterphase neben der mindestens einen Borverbindung Si₃N₄ + SiAlON ≥ Si₂ON₂ enthält.

13. Erzeugnis nach einem der Ansprüche 9 bis 12,
**dadurch gekennzeichnet, dass**
die Sinterphase folgende Bestandteile aufweist:
5 bis 95 Gew.-%, insbesondere 34 bis 59 Gew.-% Si₃N₄
4 bis 47 Gew.-%, insbesondere 21 bis 31 Gew.-% SiAlON
0,9 bis 46 Gew.-%, insbesondere 19,7 bis 34,6 Gew.-% Si₂ON₂,
0,1 bis 2 Gew.-%, insbesondere 0,3 bis 0,4 Gew.-% Bor, berechnet aus der mindestens einen enthaltenen Borverbindung oder den Borverbindungen
wobei das Si₂ON₂ anteilmäßig immer in geringerer Gewichtsmenge als oder in gleicher Menge wie Si₃N₄ vorliegt, vorzugsweise aber auch in geringerer Menge als oder in gleicher Menge wie SiAlON und in geringerer Menge als Si₃N₄ + SiAlON vorliegt.

14. Erzeugnis nach einem der Ansprüche 9 bis 13,
**dadurch gekennzeichnet, dass**
die Sinterphase zwischen 10 und 37, insbesondere zwischen 18 und 20 Gew.-% vorhanden ist.

15. Erzeugnis nach einem der Ansprüche 9 bis 14,
**dadurch gekennzeichnet, dass**
es eine Oxidationsbeständigkeit gemessen nach ASTM C-863 zwischen 0 und 1,3, insbesondere zwischen 0,2 und 0,4 Vol.-% gemessen bei 1000 °C im Beaufschlagungszeitraum bis 500 Stunden aufweist.

## Claims

1. Use of a batch to produce a granulated-SiC-based refractory product, ceramically fired in a nitrogen atmosphere, the granules of which are sintered together by way of a sinter phase containing at least one silicon nitride and at least one boron compound and additionally SiAlON,
**characterised in that**
the batch comprises at least the following constituents:
- 60 to 89.4, in particular 78 to 81 wt.% granulated SiC with a conventional range of particle sizes of between 0 and 5 mm, in particular between 0 and 3 mm,
- 10 to 25, in particular 14 to 16 wt.% Si powder,
- 0.1 to 2, in particular 0.3 to 0.4 wt.% boron component, calculated as boron from the at least one boron compound or the boron compounds,
- 0.5 to 13, in particular 4.7 to 5.6 wt.% SiAlON-forming Al component, calculated as Al₂O₃ from an Al and/or Al₂O₃ and/or Al₂O₃/SiO₂ product,
wherein a shaped article is shaped from the batch and the shaped article is ceramically fired at temperatures between 1300 °C and 1500 °C, in particular between 1400 °C and 1450 °C, in a nitrogen-containing atmosphere in such a way that a sinter phase is formed, sintering the SiC granules together, said sinter phase containing, in addition to at least one boron compound, silicon nitride or silicon nitride and silicon oxynitride, formed from the Si powder, and SiAlON,formed from the Si powder and the Al component,
and in the sinter phase, irrespective of the boron compound, SiAION and/or Si₃N₄ or Si₃N₄ plus SiAION predominates quantitatively over Si₂ON₂.

2. The use according to claim 1 ,
**characterised in that**
the batch contains up to 3 wt.% of a finely divided SiO₂ component, such as quartz sand and/or kieselguhr and/or quartz glass, and/or up to 0.5 wt.% of a finely divided calcium component, such as powdered limestone and/or Ca stearate and/or calcite and/or calcium silicate.

3. The use according to claim 1 or 2,
**characterised in that**
the batch contains as the boron component at least one boron compound from the following group:
nitrides, carbides, oxides, fluorides, metal compounds with a boron component, borates,
in particular boron carbide and/or boron oxide and/or boron nitride.

4. The use according to one of the preceding claims,
**characterised in that**
the batch contains as the SiAlON-forming Al component an Al product and/or an Al₂O₃ product which contains ≥ 40 wt.%, preferably ≥ 53 wt.% Al.

5. The use according to one of the preceding claims,
**characterised in that**
the batch contains as the SiAlON-forming Al₂O₃ component an Al₂O₃/SiO₂ product, in particular clay and/or kaolin and/or mullite.

6. The use according to claim 5,
**characterised in that**
the batch contains as the Al₂O₃/SiO₂ product at least one ceramic clay, in particular selected from the following group:
montmorillonite, illite, halloysite, bentonite, vermiculite,
in particular montmorillonite and/or bentonite and/or illite.

7. The use according to one of the preceding claims,
**characterised in that**
the batch contains up to 10 wt.%, in particular up to 4 wt.%, of the following conventional constituents, calculated on the total batch:
- organic temporary binders, in particular methylcellulose, modified starch derivatives, aqueous dextrin solutions, lignin derivatives, polyvinyl alcohols, phenolic resins and epoxy resins, furfuryl alcohol or mixtures thereof
- organic deflocculants, in particular based on polyethylene adduct, nonionic, polyoxyethylene preparation, aqueous solution of sodium polymethacrylate
- oil, in particular for increasing the flow properties and therefore the shapeability of the composition, to reduce the tendency of the composition to dry out.

8. The use according to one of the preceding claims,
**characterised in that**
a liquid, in particular water, is added to the batch and the batch is then shaped.

9. A granulated-SiC-based refractory product, ceramically fired in a nitrogen atmosphere, the granules of which are sintered together by way of a sinter phase containing at least one silicon nitride and at least one boron compound and additionally SiAlON, produced according to one of the preceding claims, **characterised in that**
the sinter phase contains, in addition to the at least one boron compound, SiAION ≥ Si₃N₄ ≥ Si₂ON₂ according to the quantity by weight.

10. A granulated-SiC-based refractory product, ceramically fired in a nitrogen atmosphere, the granules of which are sintered together by way of a sinter phase containing at least one silicon nitride and at least one boron compound and additionally SiAlON, produced according to one of claims 1 to 8, **characterised in that**
the sinter phase contains, in addition to the at least one boron compound, Si₃N₄ ≥ SiAlON ≥ Si₂ON₂ according to the quantity by weight.

11. A granulated-SiC-based refractory product, ceramically fired in a nitrogen atmosphere, the granules of which are sintered together by way of a sinter phase containing at least one silicon nitride and at least one boron compound and additionally SiAlON, produced according to one of claims 1 to 8, **characterised in that**
the sinter phase contains, in addition to the at least one boron compound, Si₃N₄ ≥ Si₂ON₂ ≥ SiAlON according to the quantity by weight.

12. A granulated-SiC-based refractory product, ceramically fired in a nitrogen atmosphere, the granules of which are sintered together by way of a sinter phase containing at least one silicon nitride and at least one boron compound and additionally SiAlON, produced according to one of claims 1 to 8, **characterised in that**
the sinter phase contains, in addition to the at least one boron compound, Si₃N₄ + SiAlON ≥ Si₂ON₂.

13. The product according to one of claims 9 to 12,
**characterised in that**
the sinter phase comprises the following constituents:
5 to 95 wt.%, in particular 34 to 59 wt.%, Si₃N₄
4 to 47 wt.%, in particular 21 to 31 wt.%, SiAlON
0.9 to 46 wt.%, in particular 19.7 to 34.6 wt.%, Si₂ON₂ 0.1 to 2 wt.%, in particular 0.3 to 0.4 wt.%, boron, calculated from the at least one boron compound or the boron compounds contained,
wherein the Si₂ON₂ is always present proportionally in a smaller quantity by weight than, or in the same quantity as, Si₃N₄, but preferably also in a smaller quantity than or in the same quantity as SiAlON and in a smaller quantity than Si₃N₄ + SiAlON.

14. The product according to one of claims 9 to 13,
**characterised in that**
the sinter phase is present at between 10 and 37, in particular between 18 and 20 wt.%.

15. The product according to one of claims 9 to 14,
**characterised in that**
it has an oxidation resistance, measured in accordance with ASTM C-863, of between 0 and 1.3, in particular between 0.2 and 0.4 vol.%, measured at 1000 °C during an exposure period of up to 500 hours.

## Revendications

1. Utilisation d'une mélange pour la production d'un produit réfractaire, à base de granulés de SiC et cuit de manière céramique sous atmosphère d'azote, dont les granulés sont frittés ensemble grâce à une phase de frittage contenant au moins un nitrure de silicium et au moins un composé de bore ainsi que du SiAlON,
**caractérisée en ce que**
la mélange présente au moins les composants ci-dessous :
- 60 à 89,4, en particulier 78 à 81 % en poids, de granulés de SiC avec une plage granulométrique usuelle comprise entre 0 et 5 mm, en particulier comprise entre 0 et 3 mm,
- 10 à 25, en particulier 14 à 16 % en poids, d'une poudre de Si,
- 0,1 à 2, en particulier 0,3 à 0,4 % en poids, de composant à base de bore, calculé en tant que bore à partir du au moins un composé de bore ou des composés de bore,
- 0,5 à 13, en particulier 4,7 à 5,6 % en poids, de composant à base de Al formant du SiAlON,calculé en tant que A1₂O₃ à partir d'un produit à base de Al et/ou de A1₂O₃ et/ou de A1₂O₃/SiO₂,
dans lequel un corps moulé est formé à partir de la mélange et le corps moulé est cuit de manière céramique dans une atmosphère contenant de l'azote à des températures comprises entre 1300 °C et 1500 °C, en particulier comprises entre 1400 °C et 1450 °C, de manière à former une phase de frittage frittant ensemble les granulés de SiC et contenant, outre au moins un composé de bore, du nitrure de silicium ou du nitrure de silicium et de l'oxynitrure de silicium, formé à partir de la poudre de Si, et du SiAlON, formé à partir de la poudre de Si et du composant à base de Al,
et, dans la phase de frittage, le SiAlON et/ou le Si₃N₄ ou le Si₃N₄ et le SiAlON l'emportent quantitativement sur le Si₂ON₂, indépendamment du composé de bore.

2. Utilisation selon la revendication 1,
**caractérisée en ce que**
la mélange contient jusqu'à 3 % en poids d'un composant à base de SiO₂ finement divisé tel que du sable de quartz et/ou de la diatomite et/ou du verre de quartz et/ou jusqu'à 0,5 % en poids d'un composant à base de calcium finement divisé tel que de la poudre de calcaire et/ou du stéarate de calcium et/ou de la calcite et/ou du silicate de calcium.

3. Utilisation selon la revendication 1 ou 2,
**caractérisée en ce que**
la mélange contient, en tant que composant à base de bore, au moins un composé de bore issu du groupe ci-dessous :
nitrures, carbures, oxydes, fluorures, composés métalliques avec des composants à base de bore, borates,
en particulier carbure de bore et/ou oxyde de bore et/ou nitrure de bore.

4. Utilisation selon l'une quelconque des revendications précédentes, **caractérisée en ce que**
la mélange contient, en tant que composant à base de Al formant le SiAlON, un produit à base de Al et/ou de A1₂O₃ contenant ≥ 40 % en poids, de préférence ≥ 53 % en poids de Al.

5. Utilisation selon l'une quelconque des revendications précédentes, **caractérisée en ce que**
la mélange contient, en tant que composant à base de A1₂O₃ formant le SiAlON, un produit à base de A1₂O₃/SiO₂, en particulier de l'argile et/ou du kaolin et/ou de la mullite.

6. Utilisation selon la revendication 5,
**caractérisée en ce que**
la mélange contient, en tant que produit à base de A1₂O₃/SiO₂, au moins une argile céramique, en particulier sélectionnée dans le groupe ci-dessous :
montmorillonite, illite, halloysite, bentonite, vermiculite,
en particulier montmorillonite et/ou bentonite et/ou illite.

7. Utilisation selon l'une quelconque des revendications précédentes, **caractérisée en ce que**
la mélange contient jusqu'à 10 % en poids, en particulier jusqu'à 4 % en poids, des constituants usuels ci-dessous, calculés par rapport à la mélange totale :
- liants organiques temporaires, en particulier méthylcellulose, dérivés d'amidon modifiés, solutions aqueuses de dextrine, dérivés de lignine, alcools polyvinyliques, résines phénoliques et résines époxydiques, alcool furfurylique ou des mélanges de ceux-ci
- fluidifiants organiques, en particulier à base d'adduit de polyéthylène non ionique, préparation de polyoxyéthylène, solution aqueuse de polyméthacrylate de sodium
- huile, en particulier afin d'augmenter la fluidité et donc la malléabilité de la masse, afin de réduire la tendance de la masse à se dessécher.

8. Utilisation selon l'une quelconque des revendications précédentes, **caractérisée en ce que**
la mélange est mélangée à un liquide, en particulier à de l'eau, puis mise en forme.

9. Produit réfractaire à base de granulés de SiC et cuit de manière céramique sous atmosphère d'azote, dont les granulés sont frittés ensemble grâce à une phase de frittage contenant au moins un nitrure de silicium et au moins un composé de bore ainsi que du SiAlON,fabriqué selon l'une quelconque des revendications précédentes,
**caractérisé en ce que**
la phase de frittage contient, outre le au moins un composé de bore, SiAlON ≥ Si₃N₄ ≥ Si₂ON₂ en quantité en poids.

10. Produit réfractaire, à base de granulés de SiC et cuit de manière céramique sous atmosphère d'azote, dont les granulés sont frittés ensemble grâce à une phase de frittage contenant au moins un nitrure de silicium et au moins un composé de bore ainsi que du SiAlON, fabriqué selon l'une quelconque des revendications 1 à 8,
**caractérisé en ce que**
la phase de frittage contient, outre le au moins un composé de bore, Si₃N₄ ≥ SiAlON ≥ Si₂ON₂ en quantités en poids.

11. Produit réfractaire, à base de granulés de SiC et cuit de manière céramique sous atmosphère d'azote, dont les granulés sont frittés ensemble grâce à une phase de frittage contenant au moins un nitrure de silicium et au moins un composé de bore ainsi que du SiAlON, fabriqué selon l'une quelconque des revendications 1 à 8,
**caractérisé en ce que**
la phase de frittage contient, outre le au moins un composé de bore, Si₃N₄ ≥ Si₂ON₂ ≥ SiAlON en quantités en poids.

12. Produit réfractaire, à base de granulés de SiC et cuit de manière céramique sous atmosphère d'azote, dont les granulés sont frittés ensemble grâce à une phase de frittage contenant au moins un nitrure de silicium et au moins un composé de bore ainsi que du SiAlON, fabriqué selon l'une quelconque des revendications 1 à 8,
**caractérisé en ce que**
la phase de frittage contient, outre le au moins un composé de bore, Si₃N₄ + SiAlON ≥ Si₂ON₂.

13. Produit selon l'une quelconque des revendications 9 à 12, **caractérisé en ce que**
la phase de frittage a les constituants ci-dessous :
5 à 95 % en poids, en particulier 34 à 59 % en poids de Si₃N₄ 4 à 47 % en poids, en particulier 21 à 31 % en poids de SiAlON
0,9 à 46 % en poids, en particulier 19,7 à 34,6 % en poids de Si₂ON₂,
0,1 à 2 % en poids, en particulier 0,3 à 0,4 % en poids de bore, calculé à partir du au moins un composé de bore contenu ou des composés de bore contenus.
dans lequel le Si₂ON₂ est toujours proportionnellement présent en une plus faible quantité en poids que le Si₃N₄ ou dans la même quantité que celui-ci, mais de manière préférée également en une plus faible quantité que le SiAlON ou dans la même quantité que celui-ci et en une plus faible quantité que Si₃N₄ + SiAlON.

14. Produit selon l'une quelconque des revendications 9 à 13, **caractérisé en ce que**
la phase de frittage est présente entre 10 et 37, en particulier entre 18 et 20 % en poids.

15. Produit selon l'une quelconque des revendications 9 à 14, **caractérisé en ce que**
il présente une résistance à l'oxydation, mesurée selon la norme ASTM C-863, comprise entre 0 et 1,3, en particulier entre 0,2 et 0,4 % en volume, mesure effectuée à 1000 °C pendant une durée d'exposition allant jusqu'à 500 heures.
